Europäisches Patentamt

**European Patent Office**

Office européen des brevets

(11) Numéro de publication: **0 128 814**
A1

(12) # DEMANDE DE BREVET EUROPEEN

(21) Numéro de dépôt: **84401134.6**

(22) Date de dépôt: **05.06.84**

(51) Int. Cl.³: **B 65 G 23/44**

(30) Priorité: **08.06.83 FR 8309519**

(43) Date de publication de la demande: **19.12.84**
**Bulletin 84/51**

(84) Etats contractants désignés: **DE GB IT SE**

(71) Demandeur: **FRIGOFRANCE S.A. Société Anonyme dite:, F-44340 Bouguenais (FR)**

(72) Inventeur: **Le Cann, Robert J., 50, rue Clément Bachelier, F-44400 Reze-les-Nantes (FR)**

(74) Mandataire: **Moulines, Pierre et al, Cabinet BEAU de LOMENIE 55, rue d'Amsterdam, F-75008 Paris (FR)**

(54) **Dispositif hydraulique d'un tapis transporteur de produits dans un tunnel de congélation.**

(57) Dispositif de tension hydraulique d'un tapis transporteur de produits dans un tunnel de congélation, ledit tapis sans fin étant guidé et entraîné par des cylindres qui sont montés rotatifs sur un bâti de support qui comporte à l'une des extrémités du dispositif transporteur trois cylindres rotatifs dont deux cylindres fixes et un cylindre de tension soumis à l'action d'un vérin hydraulique plongeur.

Le vérin (19) est alimenté par un circuit hydraulique de fluide sous pression comprenant une pompe d'alimentation (28) et un limiteur de pression (31) et en ce que sur le conduit d'alimentation (29) du vérin (19), sont montés en dérivation un accumulateur de pression ou réservoir (34) à poche de gaz (34a) et deux pressostats (35, 36) contrôlant respectivement le fonctionnement de la pompe et du tapis.

L'invention est utilisée dans les tunnels de congélation.

<u>Dispositif de tension hydraulique d'un tapis transporteur de produits</u>
<u>dans un tunnel de congélation.</u>

La présente invention a pour objet un dispositif de tension hydraulique d'un tapis transporteur de produits dans un tunnel de congélation.

Il est connu d'utiliser pour le transport de produits dans un tunnel de congélation un tapis sans fin qui est monté sur des cylindres assurant son guidage et son entraînement.

Toutefois, le tapis ne présente pas toujours la même longueur du fait qu'il se contracte pendant la descente en froid et que, lorsque sa température remonte, il a tendance à s'allonger.

Par ailleurs, il est connu d'utiliser des dispositifs pour assurer une tension hydraulique sur un élément sans fin, notamment une ou plusieurs chaînes.

Toutefois, il n'est pas prévu dans ces dispositifs des moyens permettant d'absorber les variations de longueur du tapis en fonction de la température comme dans la présente demande.

Conformément à la présente invention, le vérin est alimenté par un circuit hydraulique de fluide sous pression comprenant une pompe d'alimentation et un limiteur de pression et, sur le conduit d'alimentation du vérin, sont montés en dérivation un accumulateur de pression ou réservoir à poche de gaz et deux pressostats contrôlant respectivement le fonctionnement de la pompe et du tapis.

Cette disposition suivant l'invention permet de protéger d'une façon simple et efficace le tapis contre une tension excessive ou un manque de tension.

Par ailleurs, une temporisation limite le fonctionnement de la pompe à la durée nécessaire à la mise en pression. Si ce temps est dépassé, le moyen de temporisation arrête tout le dispositif, car c'est le signe d'une fuite importante de liquide qui risque de détériorer la pompe par manque de liquide.

D'autres caractéristiques et avantages de l'invention seront mieux compris à la lecture de la description qui va suivre d'un mode de réalisation et en se référant aux dessins annexés, sur lesquels :

- la figure 1 est une vue en élévation latérale de l'une des extrémités du bâti portant le tapis transporteur et son dispositif de tension;

- la figure 2 est une vue en élévation et en coupe du bâti suivant la ligne II-II de la figure 1;

- la figure 3 est une vue en plan et en coupe partielle du bâti suivant la ligne III-III de la figure 2;

- la figure 4 est une vue schématique du circuit hydraulique alimentant le vérin du dispositif de tension.

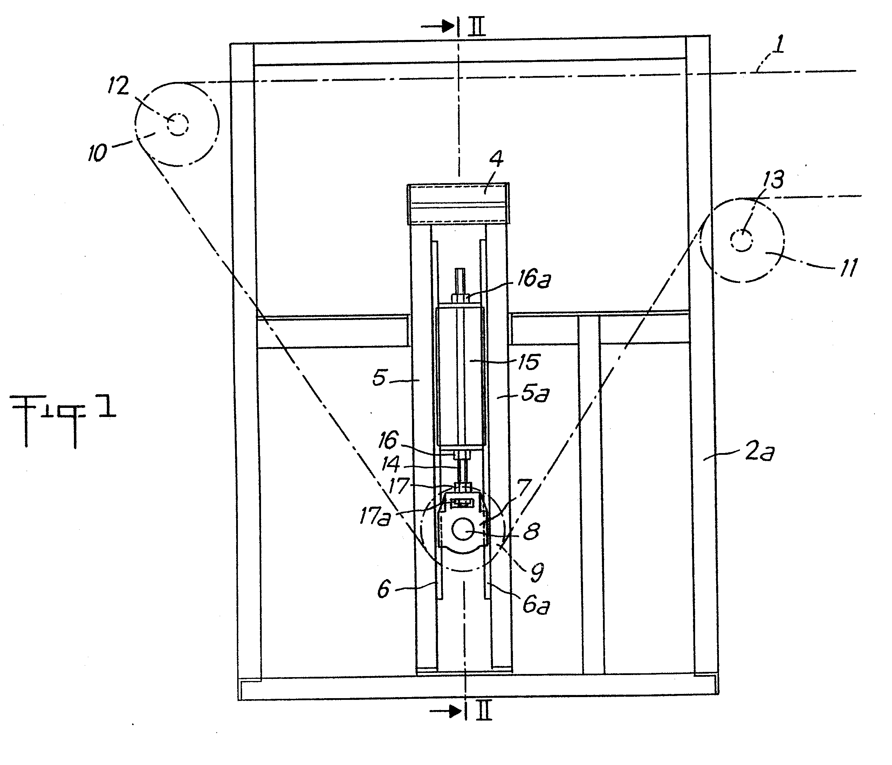

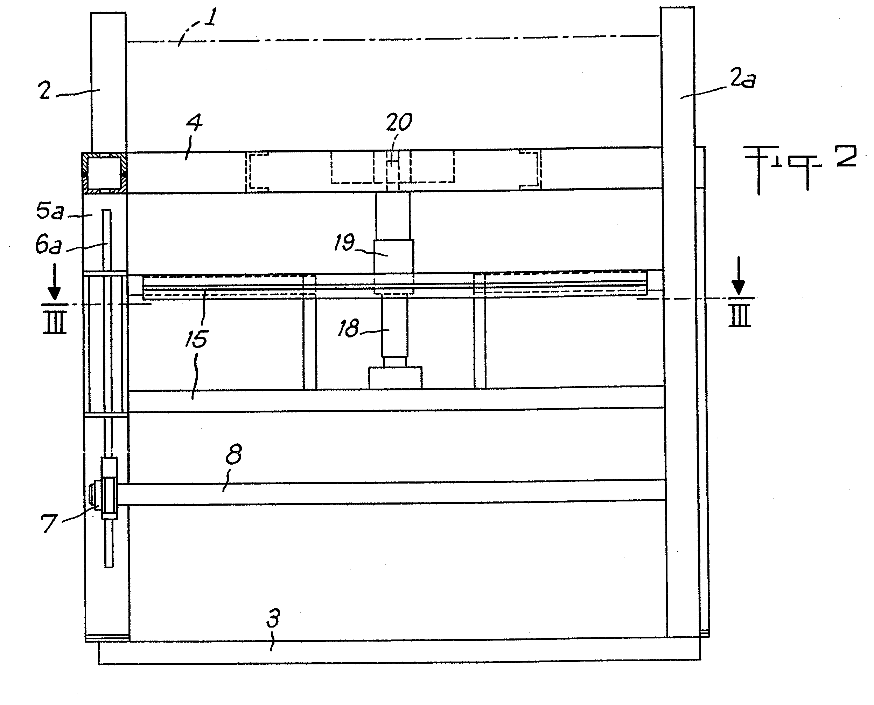

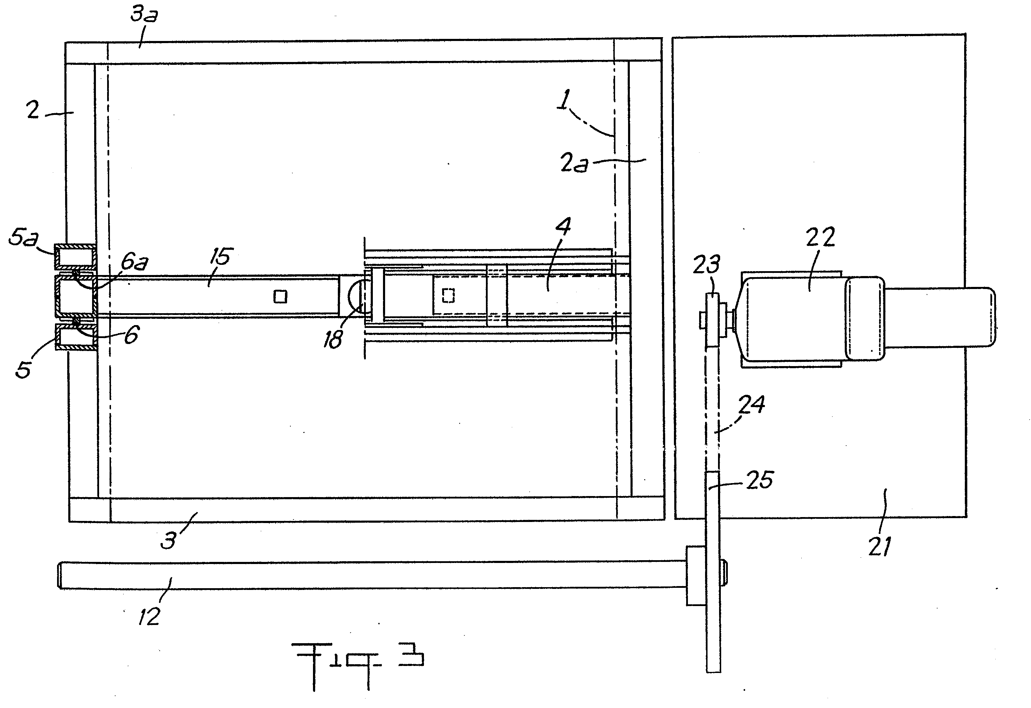

Aux figures 1, 2 et 3, on a représenté l'un des éléments d'un bâti supportant l'une des extrémités d'un tapis sans fin 1 assurant le transport de produits dans un tunnel de congélation, l'autre élément du bâti non représenté au dessin portant l'autre extrémité du tapis sans fin au moyen de cylindres rotatifs.

L'élément de bâti est constitué de deux cadres 2, 2a reliés par des poutres 3 et 4. Chacun des cadres comporte dans sa partie médiane deux montants 5, 5a munis de rails 6, 6a délimitant une glissière dans laquelle se déplace un palier 7 dans lequel est montée l'une des extrémités d'un arbre 8 d'un cylindre 9 portant le tapis sans fin 1 qui est guidé par deux autres cylindres 10 et 11 dont les arbres 12 et 13 sont montés dans des paliers fixés sur les cadres 2, 2a du bâti.

Le palier 7 est relié par une tige filetée 14 à une poutre coulissante 15 qui est montée de façon réglable sur la tige filetée 14 par des écrous 16, 16a, ledit palier 7 étant fixé sur l'extrémité de la tige filetée 14 au moyen d'écrous 17, 17a.

La poutre de pression 15 qui est montée coulissante à ses deux extrémités dans les rails 6, 6a de la glissière dans laquelle se déplace le palier 7 est soumise dans sa partie médiane à l'action d'une tige 18 d'un vérin plongeur 19 qui est fixé en 20 sur la poutre fixe 4 solidaire des montants 2, 2a de l'élément de bâti.

La disposition du palier 7 et de l'extrémité de la poutre 15 décrite ci-dessus en ce qui concerne le cadre 2 est utilisée de la même manière sur le cadre 2a pour supporter l'autre extrémité de l'arbre 8.

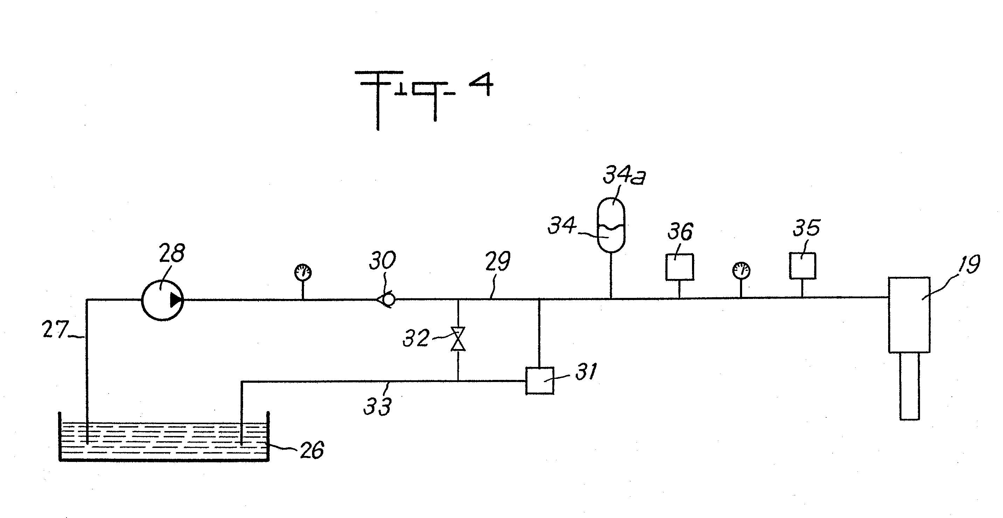

Sur l'un des côtés du bâti, est disposée une plate-forme 21 sur laquelle est monté un organe moteur 22 qui porte sur son arbre un pignon 23 relié par un organe de transmission 24 à un pignon 25 calé à l'extrémité de l'arbre 12 portant le cylindre moteur 10 qui entraîne le tapis 1. Le vérin 19 est alimenté en fluide hydraulique sous pression par le circuit qui est représenté à la figure 4 et qui comprend une bâche 26 reliée à un conduit d'aspiration 27 d'une pompe 28 dont le conduit de refoulement 29 alimente en fluide sous pression le vérin 19. En aval de la pompe 28, sont montés en série un clapet de retenue 30 et, en parallèle, un limiteur de pression 31 et un robinet de retour 32 qui est branché entre le conduit 29 et le conduit 33 de retour à la bâche 26 à partir du limiteur de pression.

Sur le conduit de refoulement 29, sont montés en parallèle un accumulateur de pression ou réservoir 34 muni d'une poche 34a de gaz comprimé, un pressostat 35 commandant l'arrêt et le fonctionnement de la pompe 28 et un pressostat 36 de sécurité haute pression commandant l'arrêt du tapis, notamment en interrompant l'alimentation de l'organe moteur 22.

De plus, le dispositif comprend un moyen de temporisation limitant la durée de fonctionnement de la pompe nécessaire pour la mise en pression du circuit. Si ce temps est dépassé, ledit moyen arrête l'ensemble du dispositif, y compris le tunnel, car cela indique une fuite importante qui risque de détériorer la pompe 28 par manque de fluide liquide.

Lors de la mise en fonctionnement du dispositif, la tension du tapis 1 est réglée au moyen du cylindre 9 en modifiant la position de la poutre coulissante 15 par rapport aux paliers 7 situés de chaque côté de l'élément de bâti.

Le circuit est mis sous pression à la température ambiante grâce à la pompe 28. Pendant la descente en froid du tunnel, le tapis 1 en se contractant repousse la tige 18 du vérin 19 vers le haut et refoule le fluide vers l'accumulateur de pression ou le réservoir 34 soumis à l'action de la poche de gaz 34a.

Lorsque la température du dispositif remonte, le tapis se détend provoquant la descente de la tige du vérin et le retour du fluide dans le vérin sous l'action du gaz qui refoule le fluide liquide du réservoir 34 dans le conduit 29.

Lorsqu'il se produit une fuite, la pompe 28 compense par son alimentation la perte de fluide et maintient la pression.

Pour les tapis de grandes longueurs, l'allongement dû à l'usure est repris par un système vis-écrou agissant sur la position de l'arbre 12.

Bien entendu l'invention n'est pas limitative et l'homme de l'art pourra y apporter des modifications sans sortir pour cela du domaine de l'invention.

REVENDICATIONS

1.     Dispositif de tension hydraulique d'un tapis transporteur de produits dans un tunnel de congélation, ledit tapis sans fin étant guidé et entraîné par des cylindres qui sont montés rotatifs sur un bâti de support qui comporte à l'une des extrémités du dispositif transporteur trois cylindres rotatifs dont deux cylindres fixes et un cylindre de tension soumis à l'action d'un vérin hydraulique plongeur, le vérin (19) étant alimenté par un circuit hydraulique de fluide sous pression comprenant une pompe d'alimentation (28) et un limiteur de pression (31) et sur le conduit d'alimentation (29) du vérin (19),étant montés en dérivation un accumulateur de pression ou réservoir (34) à poche de gaz (34a) et deux pressostats (35,36) contrôlant respectivement le fonctionnement de la pompe et du tapis, caractérisé en ce que le cylindre de tension (9) est monté rotatif par les deux extrémités de son arbre (8) sur deux paliers (7) qui coulissent dans deux glissières formées par les rails (6, 6a) disposées de part et d'autre du bâti (2, 2a) de support, lesdites glissières formées par les rails (6, 6a) recevant également les extrémités d'une poutre coulissante (15) qui est reliée auxdits paliers (7) et qui est soumise dans sa partie centrale à l'action du vérin plongeur (19) dont le corps est fixé sur une poutre (4) solidaire du bâti fixe.

2.     Dispositif suivant la revendication 1, caractérisé en ce que l'un des pressostats (35) commande l'arrêt et le fonctionnement de la pompe (28) pour des pressions moyennes et que l'autre pressostat (36) arrête le moteur (22) d'entraînement du tapis (1) lorsque la pression du circuit dépasse une limite de pression maximale.

3.     Dispositif suivant la revendication 1, caractérisé en ce que le dispositif comporte un moyen de temporisation du fonctionnement de la pompe (28).

4.     Dispositif suivant la revendication 1, caractérisé en ce que les paliers (7) sont reliés aux extrémités de la poutre de tension (15) par des vis (14) et des écrous de réglage de la position de la poutre (15) par rapport aux paliers (7).

Fig 1

1/4

0128814

Fig. 2

0128814

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | HYDRAULICS AND PNEUMATICS, vol. 29, no. 6, juin 1976, pages 66-67, Cleveland, US; A.J. STEVENS et al.: "Pressure switches control maximum/minimum conveyor-belt tension" * Page 67, colonne 1 * | 1-3 | B 65 G   23/44 |
| Y | AT-B-  368 469   (VOEST-ALPINE AG) * Figure 1 * | 1-3 | |
| Y | US-A-4 079 834   (FLETCHER et al.) *  Figures 2,3; colonne 6, lignes 36-55; colonne 7, lignes 9-23 * | 1-3 | |
| A | US-A-4 128 164   (SANDBERG) | | DOMAINES TECHNIQUES RECHERCHES (Int. Cl. ³) B 65 G   23/44 |

Le présent rapport de recherche a été établi pour toutes les revendications

| Lieu de la recherche | Date d'achèvement de la recherche | Examinateur |
|---|---|---|
| LA HAYE | 02-07-1984 | MORRIS A.A. |